# EUROPÄISCHE PATENTSCHRIFT

(11) **EP 2 169 285 B1**
(45) Veröffentlichungstag und Bekanntmachung des Hinweises auf die Patenterteilung: **20.07.2011**
(21) Anmeldenummer: 09169038.8
(22) Anmeldetag: 31.08.2009
(51) Int. Cl.: F16J 15/26

(54) **Druckpackung aus verdrehgesicherten Packungsringen mit spritzgegossenen Segmenten**
Packing device with rings secured against rotation with injection moulded segments
Garniture d'étanchéité dont les anneaux disposent d'un système anti-rotation et se composent de segments moulés par injection

(30) Priorität: 25.09.2008 AT 14972008
(43) Veröffentlichungstag der Anmeldung: 31.03.2010
(73) Patentinhaber: Hoerbiger Kompressortechnik Holding GmbH, 1220 Wien (AT)
(72) Erfinder: Hold, Christian, 1170, Wien (AT)
(74) Vertreter: Weiss, Christian

(56) Entgegenhaltungen:
- WO-A-98/04853
- GB-A- 216 392
- GB-A- 1 071 612
- US-A1- 2004 227 301

## Beschreibung

Die gegenständliche Erfindung betrifft eine Druckpackung mit einem radial geschnittenem und einem tangential geschnittenem Packungsring, die jeweils aus einer Anzahl von Packungsringsegmenten zusammen gesetzt sind und der radial geschnittene und tangential geschnittene Packungsring stirnseitig aneinander anliegend angeordnet sind, sowie ein solches spritzgegossenes radial und tangential geschnittenes Packungsringsegment.

Packungsringe von Druckpackungen für die Abdichtung von Kolbenstangen in Kompressoren bestehen in der Regel aus radial oder tangential geschnittenen Packungsringsegmenten, die lose zu einem Packungsring zusammengefügt werden und durch eine Umfangsfeder zusammengehalten werden. In einem Packungscontainer werden mehrere Packungsringe nebeneinander angeordnet, z.B. ein radial geschnittener Packungsring neben einem tangential geschnittenen Packungsring, und in einer Druckpackung können mehrere Packungscontainer hintereinander angeordnet werden. Die nebeneinander angeordneten Packungsringe müssen bekanntermaßen nicht nur zur Kolbenstange hin abdichten, sondern auch in axialer Richtung, um zu verhindern, dass das abzudichtende Medium durch die Spalten und Trennfugen an den Packungsringen ungehindert durchtreten kann. Dazu sind die Packungsringe so angeordnet, dass die Spalte bzw. Trennfugen durch die benachbarten Packungsringe gegenseitig überdeckt werden. Um diese relative Lage zueinander im Betrieb aufrechtzuerhalten, wird ein Verdrehsicherungsstift vorgesehen, der in Ausnehmungen in den beiden Packungsringen eingreift und so ein Verdrehen der Packungsringe relativ zueinander verhindert. Packungsringe einer Packung können allerdings mit unterschiedlichen Raten verschleißen, sodass ein Verdrehsicherungsstift mit zunehmendem Verschleiß verstärkt auf Scherung beansprucht wird. Diese Belastung kann so groß werden, dass der Verdrehsicherungsstift abbricht oder aus dem Segment ausbricht. Neben der offensichtlichen Problematik, dass ein abgebrochener Verdrehsicherungsstift den Packungscontainer bzw. die Druckpackung oder sogar die Kolbenstange beschädigen kann, kann dadurch auch die Dichtwirkung der Druckpackung verloren gehen, wenn sich die Packungsringe relativ zueinander so ausrichten, dass die Überdeckung der Spalten bzw. Trennfugen verloren geht. Insbesondere beim sogenannten "Ölschlag", der dazu führt, dass der radial und tangential geschnittene Ring schlagartig aufgehen, kommt es oftmals vor, dass der Verdrehsicherungsstift durch die abrupte Relativbewegung zwischen den beiden Ringen abbricht oder ausbricht. Eine Abhilfe gegen dieses Problem kann ein Verdrehsicherungsstift sein, der in einem Packungsring steckt und im benachbarten Packungsring in einer Nut geführt wird, sodass die Packungsringe unterschiedlich verschleißen können, ohne den Verdrehsicherungsstift zu belasten. Eine solche Druckpackung kann z.B. der US 2004/0227301 A1 oder der GB 1 071 612 A entnommen werden.

Eine andere Art der Verdrehsicherung ist aus der GB 216 392 A bekannt. Dabei wird in Schlitze an den Enden benachbarter Segmente ein Verbindungsstück eingesteckt, das die Segmente miteinander verbindet. An einem solchen Verbindungsstück kann ein Vorsprung vorgesehen sein, der sich aus der Stirnfläche des Dichtringes erhebt und das zur Ausbildung der Verdrehsicherung in eine Ausnehmung an einem benachbarten Dichtring eingreift.

Packungsringe werden aus einem tribologisch günstigen und verschleißfesten Material, wie z.B. PTFE, gefertigt. Packungsringsegmente werden oftmals aufwendig in einem spanabhebenden Herstellverfahren, vorrangig ein Dreh-Fräsverfahren, aus einem Halbzeug hergestellt. Fertigungstechnisch günstiger, sowohl hinsichtlich der mechanischen und physikalischen Eigenschaften des Packungsringsegmentes, als auch hinsichtlich des Fertigungsaufwandes, ist die Herstellung der Packungsringsegmente im Spritzgussverfahren, wie z.B. aus der WO 98/04853 A bekannt. Allerdings sind die für Packungsringe verwendeten Werkstoffe aufgrund der geringen mechanischen Festigkeit keine Konstruktionswerkstoffe. Es wäre daher für einen Verdrehsicherungsstift, der im Spitzgussverfahren an einem Packungsring angeformt wird, eine große Materialstärke erforderlich, um den Belastungen im Betrieb widerstehen zu können. Der Verdrehsicherungsstift müsste folglich eine entsprechende Breite und Länge aufweisen, die eine ebenso breite und lange Ausnehmung am benachbarten Packungsring bedingen würde. Insbesondere in der Länge der Nut ergibt sich aber eine konstruktive Grenze durch die Höhe des Packungsringsegmentes und der Tatsache, dass die Ausnehmung zur Aufnahme des Stiftes aus funktionellen Gründen nicht über die ganze Höhe des Packungsringsegmentes gehen darf. Eine solche große Ausnehmung in einem Packungsringsegment, falls konstruktiv überhaupt machbar, würde jedoch auch eine erhebliche mechanische Schwächung des Packungsringsegments bedeuten. Um das auszugleichen, müsste das Packungsringsegment stärker (z.B. dicker) ausgeführt werden, was aber aus Kosten- und Platzgründen unerwünscht wäre. Aus diesen Gründen wurde bisher, trotz der damit verbundnen Vorteile, davon abgesehen, spritzgegossene Packungsringsegmente mit angeformten Verdrehsicherungsstiften bzw. angeformten Ausnehmungen herzustellen und einzusetzen.

Es ist nun eine Aufgabe der gegenständlichen Erfindung, einen radial geschnittenen und zugehörigen tangential geschnittenem Packungsring mit spritzgegossenen Packungsringsegmenten und Verdrehsicherung, sowie einen Packungscontainer aus solchen Packungsringen und eine Druckpackung mit einem solchen Packungscontainer anzugeben, bei denen sowohl die Probleme einer herkömmlichen Verdrehsicherung mit Verdrehsicherungsstifte, als auch die Probleme mit herstellungstechnisch angeformten Verdrehsicherungsstiften und - nuten behoben sind.

Diese Aufgabe wird für das radial geschnittene spritzgegossenen Packungsringsegment gelöst, indem an einem Ende des Packungsringsegmentes in einer Stirnfläche eine radiale Verdrehsicherungsnut eingeformt ist. Für das tangential geschnittene spritzgegossene Packungsringsegment dadurch, dass am tangential geschnittenen Packungsringsegment eine Verdrehsicherungsnase angeformt ist, die sich aus einer Stirnfläche des Packungsringsegments erhebt. Die Lösung für den Packungscontainer ergibt sich dadurch, dass an einem radial geschnittenen Packungsringsegment an einem Ende des Packungsringsegmentes in einer dem tangential geschnittenen Packungsring zugewandten Stirnfläche eine radiale Verdrehsicherungsnut eingeformt ist und an einem spritzgegossenen tangential geschnittenen Packungsringsegment an einer dem radial geschnittenem Packungsring zugewandten Stirnfläche eine Verdrehsicherungsnase angeformt ist, die in die radiale Verdrehsicherungsnut eingreift. Durch die Anordnung der Verdrehsicherungsnut am in Umfangsrichtung gesehenen Ende des radial geschnittenen Packungsringsegmentes wird der Umstand ausgenutzt, dass zwischen zwei benachbarten radial geschnittenen Packungsringsegmenten ohnehin ein Verschleißspalt vorhanden ist. Damit kann die Verdrehsicherungsnut um die Breite des Verschleißspaltes zuzüglich eines erlaubten Verschleißmaßes des radial geschnittenen Packungsringes schmäler ausgeführt werden. Das radial geschnittene Packungsringsegment wird dadurch durch die Verdrehsicherungsnut lokal mechanisch weniger geschwächt. Die Verdrehsicherungsnase wird spritzgusstechnisch angeformt, was die Herstellung eines solchen Packungsringsegmentes erheblich vereinfacht. Außerdem muss im Packungsring kein herkömmlicher Verdrehsicherungsstift mehr befestigt werden, was ebenfalls eine mechanische Schwächung des Segmentes darstellen würde. Dadurch dass nicht nur die Breite der Verdrehsicherungsnut, sondern auch die Breite des Verschleißspaltes des radial geschnittenen Packungsringes für die Aufnahme der Verdrehsicherungsnase zur Verfügung steht, kann die Verdrehsicherungsnase breiter und damit stärker ausgeführt werden. Da die Verdrehsicherungsnase aus demselben Material wie der Packungsring besteht, kann diese auch radial länger ausgeführt werden, da bei fortschreitendem Verschleiß der Packungsringsegmente die Verdrehsicherungsnase ohne Nachteil für den Packungsring einfach mit verschleißen würde. Durch die Führung der Verdrehsicherungsnase in einer Verdrehsicherungsnut ist eine große radiale Relativbewegung zwischen radial und tangential geschnittenem Packungsring möglich, ohne die Verdrehsicherungsnase mechanisch zu belasten. Damit können der erfindungsgemäßen Verdrehsicherung auch abrupte Relativbewegungen zwischen den beiden Packungsringen, z.B. bei Auftreten eines Ölschlages, nichts anhaben.

Vorteilhaft wird an beiden Enden des radial geschnittenen Packungsringsegmentes in einer Stirnfläche eine radiale Verdrehsicherungsnut eingeformt. In einem Packungscontainer ist bevorzugt an den zugewandten Enden zweier benachbarter radial geschnittener Packungsringsegment eine radiale Verdrehsicherungsnut eingeformt, wobei die Verdrehsicherungsnase in die Verdrehsicherungsnuten der beiden radial geschnittenen Packungsringsegmente eingreift. Damit kann die Breite der Nut noch schmäler bzw. die Verdrehsicherungsnase breiter werden, da die Verdrehsicherungsnase in beide benachbarten Nuten eingreifen kann.

Wenn die Verdrehsicherungsnut bis zur radial außen liegenden Umfangsfläche und/oder bis zur radial innen liegenden Umfangsfläche des Packungsringsegments eingeformt ist, kann die Verdrehsicherungsnase radial noch länger, womit die mögliche Materialstärke der Verdrehsicherungsnase ebenfalls anwächst.

Die Verdrehsicherungsnase erstreckt sich vorteilhaft über einen Teil der radialen Höhe, vorteilhaft auch über die gesamte Höhe, des Packungsringsegments, womit die radiale Höhe des Packungsringsegments bestmöglich für die Verdrehsicherungsnase ausgenutzt wird.

Bevorzugt wird an allen radial bzw. tangential geschnittenen Packungsringsegmenten eine Verdrehsicherungsnut bzw. eine Verdrehsicherungsnase vorgesehen, womit es jeweils nur mehr einen Typ von Packungsringsegment gibt, was die Herstellung vereinfacht.

Die gegenständliche Erfindung wird nachfolgend anhand der schematischen, beispielhaften, nicht einschränkenden und vorteilhafte Ausgestaltungen zeigenden Figuren 1 bis 5 beschrieben. Dabei zeigt
Fig. 1 eine Druckpackung mit mehreren Packungscontainern,
Fig. 2 eine Anordnung eines radial und tangential geschnittenen Packungsringes mit erfindungsgemäßer Verdrehsicherung,
Fig. 3 ein erfindungsgemäßes tangential geschnittenes Packungsringsegment,
Fig. 4 ein erfindungsgemäßes radial geschnittenes Packungsringsegment und
Fig. 5 eine Anordnung eines radial und tangential geschnittenen Packungsringes mit erfindungsgemäßer Verdrehsicherung in einem Packungscontainer.

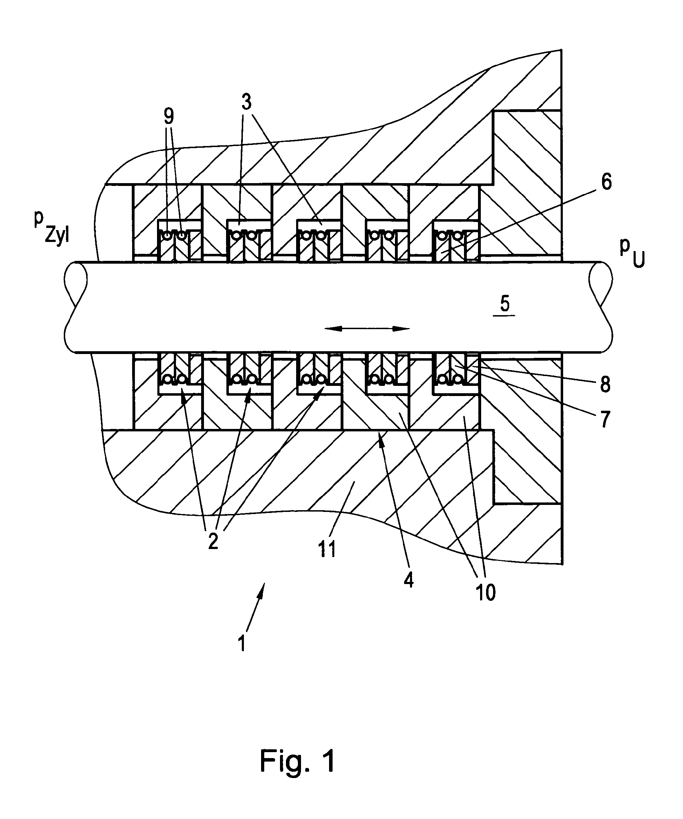

Kolbenkompressoren 1, vor allem in doppeltwirkender Bauweise, erfordern bekannter Weise eine Abdichtung des kurbelseitigen Kompressionsraumes im Zylinder, in dem der zeitlich veränderliche (hohe) Zylinderdruck p_{zyl} herrscht, entlang der oszillierenden Kolbenstange 5 gegen den im Kurbelkasten herrschenden (niedrigen) Umgebungsdruck pᵤ. Eine solche Abdichtung wird in der Regel mit einer sogenannten Druckpackung 4 bewerkstelligt, wie in Fig.1 vereinfacht dargestellt. Die Dichtelemente, die in einer solchen Druckpackung 4 zum Einsatz kommen, werden Packungsringe 6, 7 genannt und sind in einer sogenannten Packungscontainern 2, in der Regel bestehend aus einer Anzahl von Packungsringen 6, 7, angeordnet. Zur Erhöhung der Lebensdauer und Zuverlässigkeit einer Druckpackung 4 werden in einem Packungscontainer 2 mehrere solcher Packungsringe 6, 7 in Serie geschaltet. In einer Druckpackung 4 werden in der Regel mehrere Packungscontainer 2 hintereinander angereiht. Die Relativbewegung der Kontaktflächen zwischen Kolbenstange 5 und Ringen 6, 7 ruft einen Verschleiß der Packungsringe 6, 7 hervor. Dieser Ringverschleiß erfordert in der Regel geschnittene Ringformen, die ein selbsttätiges kontinuierliches Nachstellen des Ringes bei Materialabtrag an diesem Dichtspalt Ring/Kolbenstange ermöglichen. Industriestandard sind dabei radial und tangential geschnittene Ringe 6, 7, welche paarweise in Packungskammern 3 der Packungscontainer 2 eingesetzt werden, um die auftretenden Stoßspalte zur Verschleißkompensation gegenseitig abzudecken. Bei geschnittenen Ringformen kommen bekanntermaßen üblicherweise über den Außenumfang gewickelte Schlauchfedern (Umfangfedern) 9 zum Einsatz, welche die Packungsringe 6, 7 auch im drucklosen Zustand an die Kolbenstange 5 pressen. Speziell bei höheren Drücken kann bei herkömmlichen Anordnungen auch eine nennenswerte Extrusion der Packungsringe 6, 7 in den zwischen Kolbenstange 5 und Packungscontainer 2 bzw. Kammerring 10 gebildeten Spalt auftreten. Zur weitmöglichsten Vermeidung dieser Extrusion können zwischen dem Ring auf der niedrigen Druckseite und dem Kammerring 10 zusätzliche metallische, die Kolbenstange 5 nicht flächig berührende Stützringe 8 verwendet werden.

Bei einer Kombination eines radial und eines tangential geschnittenen Packungsringes 6, 7 erfolgt die Abdichtung zur Kolbenstange 5 hin im Wesentlichen nur durch den tangential geschnittenen Packungsring 7, dessen Ringsegmente 20 sich durch die tangentiale Schnittführung bei Verschleiß zusammenschieben können und somit die Dichtwirkung beibehalten. Der radial geschnittene Packungsring 6 dient im Wesentlichen nur dazu, die Verschleißspalte 23 und die tangentiale Trennfuge des tangentialen Packungsringes 7 in axialer und radialer Richtung abzudichten. Der radial geschnittene Packungsring 6 verschleißt während seiner gesamten Lebenszeit aufgrund der unterschiedlichen wirkenden Druckdifferenz mit einer niedrigeren Rate. Zwischen den radialen Packungsringsegmenten 21 bildet sich ein radialer Verschleißspalt 22 aus. Der radiale Packungsring 6 kann somit maximal nur so weit verschleißen, bis die radialen Packungsringsegmente 21 in Umfangsrichtung aneinander liegen. Die radial und tangential geschnittenen Packungsringe 6, 7 verschleißen somit aufgrund der unterschiedlichen wirkenden Druckdifferenzen unterschiedlich.

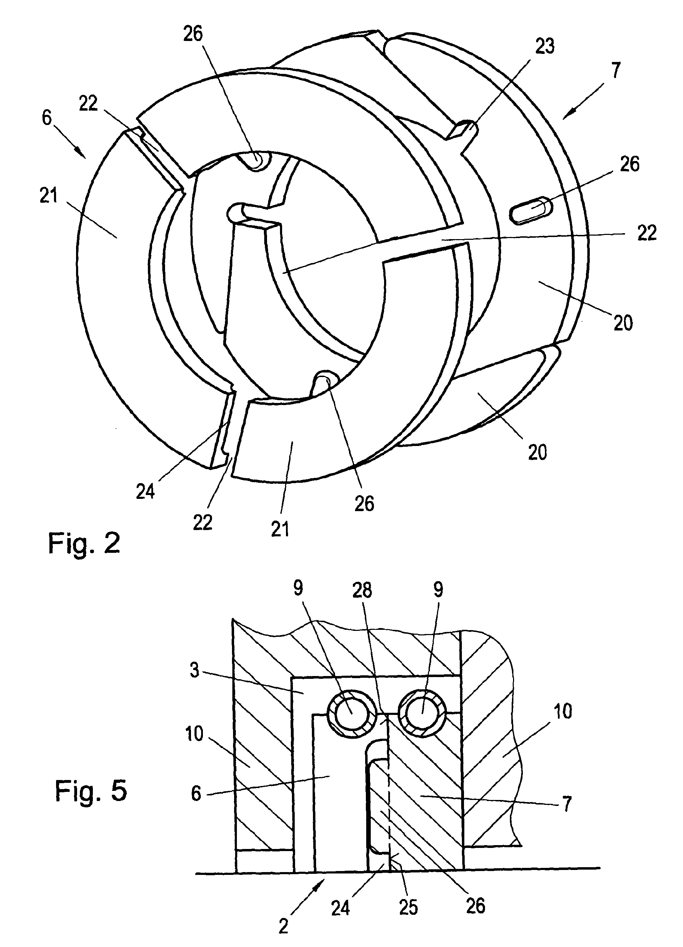

Damit die Verschleißspalte 22, 23 und die Trennfuge durch den jeweils anderen Ring abgedichtet werden, was für die Dichtwirkung unumgänglich ist, dürfen sich der radial und tangential geschnittene Packungsring 6, 7 nicht, bzw. nur sehr gering, relativ zueinander verdrehen. Deshalb ist eine Verdrehsicherung notwendig, die ein solches Verdrehen verhindern soll und die im Nachfolgenden unter Bezugnahme auf die Figuren 2 bis 5 beschrieben wird.

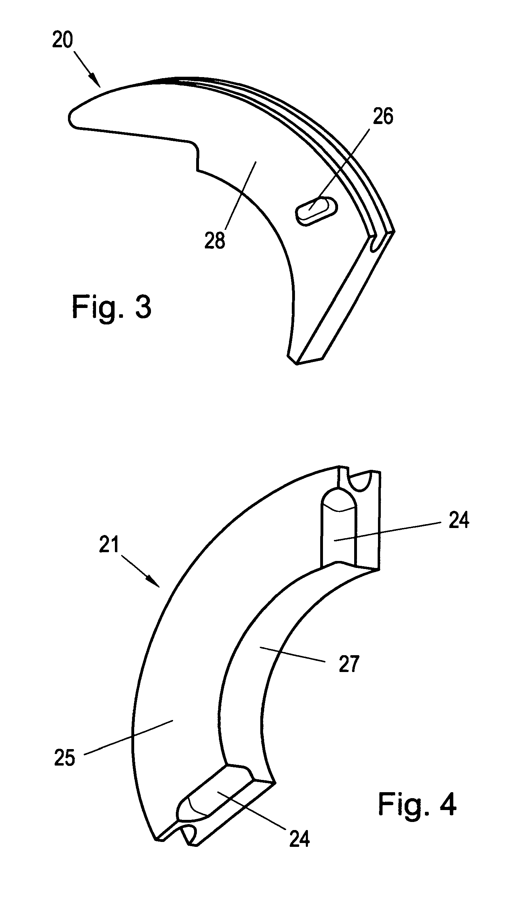

Die radial und tangential geschnittenen Packungsringsegmente 20, 21 sind erfindungsgemäß in einem Spritzgussverfahren hergestellt. An zumindest einem radial geschnittenen Packungsringsegment 21 ist an einem Ende (in Umfangsrichtung gesehen) in einer Stirnfläche 25 eine Verdrehsicherungsnut 24 eingeformt, siehe Fig. 4. Diese Verdrehsicherungsnut 24 ist in Umfangsrichtung zum Ende des Segmentes hin offen und ist bevorzugt radial ausgerichtet und kann sich von der inneren Umfangsfläche 27 eine bestimmte Länge in radialer Richtung erstrecken. Die Verdrehsicherungsnut 24 könnte sich auch über die ganze radiale Höhe des Packungsringsegmentes 21 erstrecken. Die Verdrehsicherungsnut 24 kann sich aber auch nur zentral angeordnet sein, womit sich radial innen und außen ein kurzer Steg ausbilden würde. Ebenso kann an beiden Enden des radialen Packungsringsegmentes 21 eine solche Verdrehsicherungsnut 24 vorgesehen sein. Die Verdrehsicherungsnut 24 kann dabei vorteilhaft bereits beim Spritzgießen durch entsprechende Formgebung der Spritzgussform eingeformt werden, kann aber auch nach dem Spritzgießen eingearbeitet, z.B. eingefräst, werden.

An einem tangential geschnittenen Packungsringsegment 20 ist im Spritzgussverfahren eine Verdrehsicherungsnase 26 angeformt, die sich aus einer Stirnfläche 28 erhebt, siehe Fig. 3. Die Verdrehsicherungsnase 26 ist bevorzugt radial ausgerichtet und erstreckt sich über einen Teil der radialen Höhe des Packungsringsegmentes 20. Die Verdrehsicherungsnase 26 könnte auch bis zur radial innen liegenden Umfangsfläche des tangentialen Packungsringsegments 20 reichen oder sich über die ganze radiale Höhe des Packungsringsegments 20 erstrecken. Da die Verdrehsicherungsnase 26 durch das Spritzgießen aus demselben Material besteht wie das Packungsringsegment 20 verschleißt die Verdrehsicherungsnase 26 bei fortschreitendem Verschleiß des tangentialen Packungsringsegmentes 20 einfach mit. Aus diesem Grund kann die Verdrehsicherungsnase 26 auch ausreichend lang werden, um die für die darauf wirkenden mechanischen Belastungen notwendige Materialstärke zu erreichen.

Eine Anzahl tangential geschnittener Packungsringsegmente 20 werden zu einem tangential geschnittenen Packungsring 7 zusammengesetzt, der in einem Packungscontainer 2 stirnseitig an einem radial geschnittenem Packungsring 6, bestehend aus einer Anzahl von radial geschnittenen Packungsringsegmenten 21, anliegt, wie in Fig. 5 dargestellt. Dabei greift die Verdrehsicherungsnase 26 in die Verdrehsicherungsnut 24 ein, womit ein Verdrehen der Packungsringe 6, 7 relativ zueinander verhindert wird bzw. ein Verdrehen nur in einem bestimmten Maß, gegeben durch die Breite der Verdrehsicherungsnut 24 im Verhältnis zur Breite der Verdrehsicherungsnase 26, ermöglicht wird. Die Verdrehsicherungsnase 26 kann auch in die Verdrehsicherungsnuten 24 zweier benachbarter radial geschnittener Packungsringsegmente 21 eingreifen. Durch die Anordnung der Verdrehsicherungsnut 24 am in Umfangsrichtung gesehenen Ende des Packungsringsegments 21, also im Bereich des radialen Verschleißspaltes 22, kann die Verdrehsicherungsnut 24 schmäler werden, da für die Verdrehsicherungsnase 26 auch der Verschleißspalt 22 zur Verfügung steht. Dadurch wird das radiale Packungsringsegment 21 durch die Verdrehsicherungsnut 24 mechanisch weniger geschwächt. Umgekehrt bedeutet das, dass die Verdrehsicherungsnase 26 breiter werden kann und damit mehr Materialstärke für die Verdrehsicherungsnase 26 erreicht werden kann.

Am vorteilhaftesten sind an beiden Enden des radialen Packungsringsegmentes 21 Verdrehsicherungsnuten 24 eingeformt, da dann die Verdrehsicherungsnuten 24 noch schmäler werden können bzw. die Verdrehsicherungsnase noch breiter, da die Verdrehsicherungsnase 26 in beide Verdrehsicherungsnuten 24 eingreifen kann.

Zumindest das tangential geschnittene Packungsringsegment 20 mit der Verdrehsicherungsnase 26 ist in einem Spritzgussverfahren hergestellt. Auch das radial geschnittene Packungsringsegment 21 ist bevorzugt fertigungstechnisch günstig im Spritzgussverfahren hergestellt. Die Verdrehsicherungsnut 24 wird dabei bevorzugt bereits beim Spritzgießen eingeformt, kann aber auch nachträglich eingearbeitet werden. Bevorzugt werden aber alle Packungsringsegmente 20, 21 sowohl mit Verdrehsicherungsnase 26 bzw. Verdrehsicherungsnut 24 spritzgegossen.

## Patentansprüche

1. Radial geschnittenes spritzgegossenes Packungsringsegment, **dadurch gekennzeichnet, dass** an einem Ende des Packungsringsegmentes (21) in einer Stirnfläche (25) eine radiale Verdrehsicherungsnut (24) eingeformt ist.

2. Radial geschnittenes spritzgegossenes Packungsringsegment nach Anspruch 1, **dadurch gekennzeichnet, dass** an beiden Enden des Packungsringsegmentes (21) in einer Stirnfläche (25) eine radiale Verdrehsicherungsnut (24) eingeformt ist.

3. Radial geschnittenes spritzgegossenes Packungsringsegment nach Anspruch 1 oder 2, **dadurch gekennzeichnet, dass** die Verdrehsicherungsnut (24) bis zur radial außen liegenden Umfangsfläche und/oder bis zur radial innen liegenden Umfangsfläche (27) des Packungsringsegments (21) eingeformt ist.

4. Tangential geschnittenes spritzgegossenes Packungsringsegment, **dadurch gekennzeichnet, dass** am tangential geschnittenen Packungsringsegment (20) eine lämgserstreckende Verdrehsicherungsnase (26) angeformt ist, die sich aus einer Stirnfläche (28) des Packungsringsegments (20) erhebt und die sich über einen Teil der radialen Höhe des Packungsringsegments (20) oder über die gesamte radiale Höhe des Packungsringsegments (20) erstreckt.

5. Packungscontainer mit einem radial geschnittenem (6) und einem tangential geschnittenem Packungsring (7), die jeweils aus einer Anzahl von Packungsringsegmenten (20, 21) nach Anspruch 1 bis 3 bzw. Anspruch 4 zusammen gesetzt sind und der radial geschnittene (6) und tangential geschnittene Packungsring (7) stirnseitig aneinander anliegend angeordnet sind, **dadurch gekennzeichnet, dass** an einem spritzgegossenen radial geschnittenen Packungsringsegment (21) an einem Ende des Packungsringsegmentes (21) in einer dem tangential geschnittenen Packungsring (7) zugewandten Stirnfläche (25) eine radiale Verdrehsicherungsnut (24) eingeformt ist und an einem spritzgegossenem tangential geschnittenen Packungsringsegment (20) an einer dem radial geschnittenem Packungsring (6) zugewandten Stirnfläche (28) eine Verdrehsicherungsnase (26) angeformt ist, die in die radiale Verdrehsicherungsnut (24) eingreift.

6. Packungscontainer nach Anspruch 5, **dadurch gekennzeichnet, dass** an allen radial geschnittenen Packungsringsegmenten (21) eine Verdrehsicherungsnut (24) vorgesehen ist.

7. Packungscontainer nach Anspruch 6, **dadurch gekennzeichnet, dass** an allen tangential geschnittenen Packungsringsegmenten (20) eine Verdrehsicherungsnase (26) angeformt ist.

8. Packungscontainer nach einem der Ansprüche 5 bis 7, **dadurch gekennzeichnet, dass** an den zugewandten Enden zweier benachbarter radial geschnittener Packungsringsegment (21) des radial geschnittenen Packungsringes (6) in einer Stirnfläche (25) eine radiale Verdrehsicherungsnut (24) eingeformt ist und die Verdrehsicherungsnase (26) am spritzgegeossenem tangential geschnittenen Packungsringsegment (20) in die Verdrehsicherungsnuten (24) der beiden radial geschnittenen Packungsringsegmente (21) eingreift.

9. Packungscontainer nach einem der Ansprüche 5 bis 8, **dadurch gekennzeichnet, dass** die Verdrehsicherungsnut (24) bis zur radial außen liegenden Umfangsfläche und/oder bis zur radialinnen liegenden Umfangsfläche (27) des radial geschnittenen Packungsringsegments (21) eingeformt ist.

10. Druckpackung mit einer Anzahl hintereinander angeordneten Packungscontainern, wobei zumindest ein Packungscontainer (2) nach einem der Ansprüche 5 bis 9 ausgeführt ist.

## Claims

1. Radially cut injection-molded packing ring segment, **characterized in that** a radial anti-rotation groove (24) is molded in at an end face (25) on one end of the packing ring segment (21).

2. Radially cut injection-molded packing ring segment according to Claim 1, **characterized in that** a radial anti-rotation groove (24) is molded in at an end face (25) at both ends of the packing ring segment (21).

3. Radially cut injection-molded packing ring segment according to Claims 1 or 2, **characterized in that** the anti-rotation groove (24) is molded in up to the radially outer circumferential surface and/or up to the radially inner circumferential surface (27) of the packing ring segment (21).

4. Tangentially cut injection-molded packing ring segment, **characterized in that** an elongated anti-rotation nib (26) is molded onto the tangentially cut injection-molded packing ring segment (20), the nib projecting from the end face (28) of the packing ring segment (20), and extending over part of the radial height of the packing ring segment (20) or over the entire radial height of the packing ring segment (20).

5. Packing container comprising a radially cut (6) and a tangentially cut packing ring (7) that are each composed of a number of packing ring segments (21, 21) according to Claims 1 through 3 or Claim 4, and the radially cut (6) and tangentially cut packing ring (7) are arranged abutting one another at the end face, **characterized in that** a radial anti-rotation groove (24) is molded into an injection-molded radially cut packing ring segment (21) at one end of the packing ring segment (21) in an end face (25) facing the tangentially cut packing ring segment (7), and an anti-rotation nib (26) is molded onto an injection-molded tangentially cut packing ring segment (20) at an end face (28) facing the radially cut packing ring (6), the nib engaging the radial anti-rotation groove (24).

6. Packing container according to Claim 5, **characterized in that** an anti-rotation groove (24) is provided on all radially cut packing ring segments (21).

7. Packing container according to Claim 6, **characterized in that** an anti-rotation nib (26) is molded onto all tangentially cut packing ring segments (20)

8. Packing container according to one of Claims 5 through 7, **characterized in that** a radial anti-rotation groove (24) is molded into an end face (25) at the facing ends of two adjacent radially cut packing ring segments (21) of the radially cut packing ring (6), and the anti-rotation nib (26) on the injection-molded tangentially cut packing ring segment (20) engages the anti-rotation grooves (24) of the two radially cut packing ring segments (21).

9. Packing container according to one of Claims 5 through 8, **characterized in that** the anti-rotation groove (24) is molded in up to the radially outer circumferential surface and/or up to the radially inner circumferential surface (27) of the radially cut packing ring segment (21).

10. Pressure packing comprising a number of packing containers arranged in series, wherein at least one packing container (2) is implemented according to Claims 5 through 9.

## Revendications

1. Segment de joint d'étanchéité moulé par injection et sectionné radialement, **caractérisé en ce qu'**il est formé à une extrémité du segment de joint d'étanchéité (21), dans une face frontale (25), une rainure radiale destinée à empêcher la rotation (24).

2. Segment de joint d'étanchéité moulé par injection et sectionné radialement selon la revendication 1, **caractérisé en ce qu'**il est formé aux deux extrémités du segment de joint d'étanchéité (21), dans une face frontale (25), une rainure radiale destinée à empêcher la rotation (24).

3. Segment de joint d'étanchéité moulé par injection et sectionné radialement selon l'une des revendications 1 ou 2, **caractérisé en ce que** la rainure destinée à empêcher la rotation (24) est formée jusqu'à la surface circonférentielle tournée radialement vers l'extérieur et/ou jusqu'à la surface circonférentielle tournée radialement vers l'intérieur (27) du segment de joint d'étanchéité (21).

4. Segment de joint d'étanchéité moulé par injection et sectionné tangentiellement, **caractérisé en ce qu'**il est formé sur le segment de joint d'étanchéité sectionné tangentiellement (20) un mentonnet allongé longitudinalement destiné à empêcher la rotation (26), qui s'élève par rapport à une face frontale (28) du segment de joint d'étanchéité (20) et qui s'étend sur une partie de la hauteur radiale du segment de joint d'étanchéité (20) ou sur la totalité de la hauteur radiale du segment de joint d'étanchéité (20).

5. Conteneur de garniture d'étanchéité, possédant un joint d'étanchéité sectionné radialement (6) et un joint d'étanchéité sectionné tangentiellement (7), chacun étant composé d'un certain nombre de segments de joint d'étanchéité (20, 21) selon l'une des revendications 1 à 3 ou selon la revendication 4, le joint d'étanchéité sectionné radialement (6) et le joint d'étanchéité sectionné tangentiellement (7) reposant l'un sur l'autre par leurs faces, **caractérisé en ce que**, sur un segment de joint d'étanchéité moulé par injection et sectionné radialement (21), sur une extrémité du segment de joint d'étanchéité (21), dans une face frontale (25) tournée vers le joint d'étanchéité sectionné tangentiellement (7), il est formé une rainure radiale destinée à empêcher la rotation (24) et **en ce que**, sur un segment de joint d'étanchéité moulé par injection et sectionné tangentiellement (20), dans une face frontale (28) tournée vers le joint d'étanchéité sectionné radialement (6), il est formé un mentonnet destiné à empêcher la rotation (26), qui s'engage dans la rainure radiale destinée à empêcher la rotation (24).

6. Conteneur de garniture d'étanchéité selon la revendication 5, **caractérisé en ce qu'**il est prévu sur tous les segments de joint d'étanchéité sectionnés radialement (21) une rainure destinée à empêcher la rotation (24).

7. Conteneur de garniture d'étanchéité selon la revendication 6, **caractérisé en ce qu'**il est prévu sur tous les segments de joint d'étanchéité sectionnés tangentiellement (20) un mentonnet destiné à empêcher la rotation (26).

8. Conteneur de garniture d'étanchéité selon l'une des revendications 5 à 7, **caractérisé en ce que**, aux extrémités tournées l'une vers l'autre de deux segments de joint d'étanchéité sectionnés radialement (21) du joint d'étanchéité sectionné radialement (6), il est formé dans une face frontale (25) une rainure radiale destinée à empêcher la rotation (24) et **en ce que** le mentonnet destiné à empêcher la rotation (26) placé sur le segment de joint d'étanchéité moulé par injection et sectionné tangentiellement (20) s'engage dans les rainures destinées à empêcher la rotation (24) des deux segments de joint d'étanchéité sectionnés radialement (21).

9. Conteneur de garniture d'étanchéité selon l'une des revendications 5 à 8, **caractérisé en ce que** la rainure destinée à empêcher la rotation (24) est formée jusqu'à la surface circonférentielle tournée radialement vers l'extérieur et/ou jusqu'à la surface circonférentielle tournée radialement vers l'intérieur (27) du segment de joint d'étanchéité (21).

10. Garniture comprimée composée d'un certain nombre de conteneurs de garniture d'étanchéité juxtaposés l'un derrière l'autre, au moins l'un des conteneurs de garniture d'étanchéité (2) étant réalisé selon l'une des revendications 5 à 9.
